(19) Europäisches Patentamt
European Patent Office
Office européen des brevets

(11) **EP 2 424 900 B1**

(12) **EUROPÄISCHE PATENTSCHRIFT**

(45) Veröffentlichungstag und Bekanntmachung des Hinweises auf die Patenterteilung:
**03.04.2013  Patentblatt 2013/14**

(51) Int Cl.:
*C08F 2/10* (2006.01)     *A61L 15/24* (2006.01)
*C08F 6/06* (2006.01)     *C08J 3/28* (2006.01)

(21) Anmeldenummer: **10715791.9**

(86) Internationale Anmeldenummer:
**PCT/EP2010/055100**

(22) Anmeldetag: **19.04.2010**

(87) Internationale Veröffentlichungsnummer:
**WO 2010/124954 (04.11.2010 Gazette 2010/44)**

(54) **VERFAHREN ZUR ABTRENNUNG METALLISCHER VERUNREINIGUNGEN**

METHOD FOR REMOVING METAL IMPURITIES

PROCÉDÉ DE SÉPARATION D'IMPURETÉS MÉTALLIQUES

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **30.04.2009  EP 09159155**

(43) Veröffentlichungstag der Anmeldung:
**07.03.2012  Patentblatt 2012/10**

(73) Patentinhaber: **BASF SE**
**67056 Ludwigshafen (DE)**

(72) Erfinder:
• **FUNK, Rüdiger**
**65527 Niedernhausen (DE)**
• **SCHRÖDER, Jürgen**
**67071 Ludwigshafen (DE)**
• **PFEIFFER, Thomas**
**67459 Böhl-Iggelheim (DE)**
• **BITZER, Emil**
**67127 Rödersheim-Gronau (DE)**

(56) Entgegenhaltungen:
**US-B2- 6 716 894**

**Beschreibung**

Die vorliegende Erfindung betrifft ein Verfahren zur Abtrennung metallischer Verunreinigungen aus einem wasserabsorbierende Polymerpartikel enthaltenden Produktmassenstrom mittels Stabmagneten, wobei die wasserabsorbierenden Polymerpartikel ein Tensid enthalten und unmittelbaren Kontakt mit den Stabmagneten haben.

Wasserabsorbierende Polymerpartikel werden zur Herstellung von Windeln, Tampons, Damenbinden und anderen Hygieneartikeln, aber auch als wasserzurückhaltende Mittel im landwirtschaftlichen Gartenbau verwendet. Die wasserabsorbierenden Polymerpartikel werden auch als Superabsorber bezeichnet.

Die Herstellung wasserabsorbierender Polymerpartikel wird in der Monographie "Modern Superabsorbent Polymer Technology", F.L. Buchholz und A.T. Graham, Wiley-VCH, 1998, Seiten 71 bis 103, beschrieben.

Die Eigenschaften der wasserabsorbierenden Polymerpartikel können beispielsweise über die verwendete Vernetzermenge eingestellt werden. Mit steigender Vernetzermenge sinkt die Zentrifugenretentionskapazität (CRC) und die Absorption unter einem Druck von 21,0 $g/cm^2$ (AUL0.3psi) durchläuft ein Maximum.

Zur Verbesserung der Anwendungseigenschaften, wie beispielsweise Permeabilität des gequollenen Gelbetts (SFC) in der Windel und Absorption unter einem Druck von 49.2 $g/cm^2$ (AUL0.7psi), werden wasserabsorbierende Polymerpartikel im allgemeinen oberflächennachvernetzt. Dadurch steigt der Vernetzungsgrad der Partikeloberfläche, wodurch die Absorption unter einem Druck von 49,2 $g/cm^2$ (AUL0.7psi) und die Zentrifugenretentionskapazität (CRC) zumindest teilweise entkoppelt werden können. Diese Oberflächennachvernetzung kann in wässriger Gelphase durchgeführt werden. Vorzugsweise werden aber getrocknete, gemahlene und abgesiebte Polymerpartikel (Grundpolymer) an der Oberfläche mit einem Oberflächennachvernetzer beschichtet, thermisch oberflächennachvernetzt und getrocknet. Dazu geeignete Vernetzer sind Verbindungen, die mit mindestens zwei Carboxylatgruppen der wasserabsorbierenden Polymerpartikel kovalente Bindungen bilden können.

In der EP 1 422 257 A1 wird ein Verfahren zur Abtrennung von Verunreinigungen aus einem wasserabsorbierende Polymerpartikel enthaltenden Produktmassenstrom mittels eines Magnetabscheiders beschrieben.

Aufgabe der vorliegenden Erfindung war die Bereitstellung eines verbesserten Verfahrens zur Herstellung wasserabsorbierender Polymerpartikel, insbesondere ein hohe Abscheiderate an metallischen Verunreinigungen und eine leichte Reinigung des dazu verwendeten Magnetabscheiders.

Gelöst wurde die Aufgabe durch ein Verfahren zur Herstellung wasserabsorbierender Polymerpartikel durch Polymerisation einer Monomerlösung oder -suspension, enthaltend

   a) mindestens ein ethylenisch ungesättigtes, säuregruppentragendes Monomer, das zumindest teilweise neutralisiert sein kann,
   b) mindestens einen Vernetzer,
   c) mindestens einen Initiator,
   d) optional ein oder mehrere mit den unter a) genannten Monomeren copolymerisierbare ethylenisch ungesättigte Monomere und
   e) optional ein oder mehrere wasserlösliche Polymere,

wobei metallische Verunreinigungen aus einem wasserabsorbierende Polymerpartikel enthaltenden Produktmassenstrom mittels eines Magnetabscheiders abgetrennt werden, der Magnetabscheider aus Stabmagneten aufgebaut ist, die Stabmagneten aus einer Hülse und einem in der Hülse befindlichen magnetischem Material bestehen und die Hülse unlösbar mit dem magnetischen Material verbunden ist, dadurch gekennzeichnet, dass die Hülsen unmittelbaren Kontakt zu den wasserabsorbierenden Polymerpartikeln haben können und die wasserabsorbierenden Polymerpartikel mindestens ein Tensid enthalten.

Die Hülse ist unlösbar mit dem magnetischen Material verbunden, dies bedeutet, dass das magnetische Material zur Reinigung der Stabmagnete nicht aus der Hülse entfernt werden kann oder nicht ohne Beschädigung des Stabmagneten aus der Hülse entfernt werden kann.

Das in den Stabmagneten eingesetzte magnetische Material besteht üblicherweise aus mehreren aneinander gesetzten Einzelmagneten. Die magnetische Feldstärke eines Einzelmagneten nimmt mit der Entfernung von den Magnetpolen ab. Durch Verwendung mehrerer Einzelmagnete kann der Bereich niedriger magnetischer Feldstärke minimiert werden.

Die Hülsen sind üblicherweise aus austenitischem Stahl, beispielsweise Stahl der Werkstoffnummer 1.4404 gemäß DIN EN 10020. Es sind aber auch andere Materialien, wie Polytetrafluorethylen, geeignet.

Da sich durch die Hülsen der Abstand des magnetischen Materials von der äußeren Oberfläche der Stabmagnete erhöht, sinkt damit auch die an der äußeren Oberfläche wirksame magnetische Feldstärke. Zu dicke Hülsen sind daher zu vermeiden. Andererseits sollten die Hülsen eine ausreichende mechanische Stabilität aufweisen.

Für das erfindungsgemäße Verfahren sind alle anionischen, kationischen, nichtionischen und amphoteren Tenside geeignet. Tenside setzen die Grenzflächenspannung herab und sind zur Micellisierung fähig. Eine Definition für Tenside findet sich in Römpp Chemie Lexikon auf Seite 4497 (ISBN 3-13-102759-2).

Geeignete Tenside sind beispielsweise Sorbitanmonoester, wie Sorbitanmonococoat und Sorbitanmonolaurat, oder ethoxylierte Varianten davon, wie beispielsweise Polysorbat 20, das unter der Handelsmarke Tween® 20 vertrieben wird (ICI Americas Inc., Wilmington, US). Weitere sehr geeignete Tenside stellen die ethoxylierten und alkoxylierten Derivate des 2-Propylheptanols dar, die unter den Handelsmarken Lutensol® XL und Lutensol® XP vertrieben werden (BASF SE, Ludwigshafen, DE).

Das Tensid kann bereits der Monomerlösung oder -suspension zugesetzt werden. Vorteilhafter ist es aber das Tensid vor, während oder nach der Oberflächennachvernetzung zuzusetzen, wobei die zur Aufbringung des Oberflächennachvernetzers üblichen Mischer geeignet sind. Besonders vorteilhaft wird das Tensid erst unmittelbar vor dem Magnetabscheider zugesetzt.

Die Einsatzmenge an Tensid im erfindungsgemäßen Verfahren ist vom Zugabeort abhängig. Das Tensid kann beispielsweise bereits der Monomerlösung zugesetzt werden. Es ist aber auch möglich das Tensid zusammen mit dem Oberflächennachvernetzer oder bei der Nachbefeuchtung zuzusetzen. Der Zugabeort hat aber einen entscheidenden Einfluss auf die wirksame Menge an Tensid auf der Oberfläche der wasserabsorbierenden Partikel. Gleichzeitig ist das auf der Oberfläche der wasserabsorbierenden Partikel befindliche Tensid im erfindungsgemäßen Verfahren besonders wirksam.

Wird das Tensid beispielsweise bereits der Monomerlösung zugesetzt, so beträgt die Einsatzmenge des Tensids bezogen auf die wasserabsorbierenden Polymerpartikel vorzugsweise 0,005 bis 0,2 Gew.-%, besonders bevorzugt 0,02 bis 0,1 Gew.-%, ganz besonders bevorzugt 0,04 bis 0,06 Gew.-%.

Wird das Tensid beispielsweise mit dem Oberflächennachvernetzer zugesetzt, so beträgt die Einsatzmenge des Tensids bezogen auf die wasserabsorbierenden Polymerpartikel vorzugsweise 0,001 bis 0,1 Gew.-%, besonders bevorzugt 0,002 bis 0,05 Gew.-%, ganz besonders bevorzugt 0,005 bis 0,02 Gew.-%.

Wird das Tensid beispielsweise bei der Nachbefeuchtung zugesetzt, so beträgt die Einsatzmenge des Tensids bezogen auf die wasserabsorbierenden Polymerpartikel vorzugsweise 0,0005 bis 0,05 Gew.-%, besonders bevorzugt 0,001 bis 0,02 Gew.-%, ganz besonders bevorzugt 0,002 bis 0,01 Gew.-%.

Das erfindungsgemäß einzusetzende Tensid beeinflusst auch die Oberflächenspannung des wässrigen Extrakts der gequollenen wasserabsorbierenden Polymerpartikel.

Eine zu niedrige Oberflächenspannung erhöht die Oberflächenfeuchte der Windel nach Flüssigkeitsbeladung und ist daher zu vermeiden. Die Einsatzmenge an Tensid sollte so gewählt werden, dass die Oberflächenspannung des wässrigen Extrakts der gequollenen wasserabsorbierenden Polymerpartikel bei 23°C vorzugsweise mindestens 0,06 N/m, besonders bevorzugt mindestens 0,065 N/m, ganz besonders bevorzugt mindestens 0,072 N/m, beträgt. Die Oberflächenspannung des wässrigen Extrakts der gequollenen wasserabsorbierenden Polymerpartikel wird gemäß der in der WO 2006/042704 A2 (Seite 25, Zeilen 29 bis 37) beschriebenen Methode bestimmt.

Die Stabmagnete beladen sich während des Betriebes mit metallischen Verunreinigungen sowie anhaftenden wasserabsorbierenden Polymerpartikeln und müssen daher regelmäßig gereinigt werden. Dazu werden die Stabmagnete aus dem Produktmassenstrom entfernt und die anhaftenden metallischen Verunreinigungen sowie wasserabsorbierende Polymerpartikel beispielsweise mittels eines Staubsaugers entfernt. Nachteilig hierbei ist, dass sich die Stabmagnete so nur sehr schwer reinigen lassen.

Zur leichteren Reinigung können Stabmagnete in zusätzlichen, lösbaren Hülsen aus einem nicht-magnetisierbaren Material, beispielsweise Edelstahl, eingesetzt werden. An den zusätzlichen Hülsen abgeschiedenes Material lässt sich durch Herausziehen der Stabmagnete leicht entfernen. Derartige Systeme sind beispielsweise unter der Bezeichnung EASY CLEAN Abreinigung (S+S Separation and Sorting Technology GmbH, Schönberg, DE) erhältlich. Nachteilig hierbei ist, dass die Magnetfeldstärke an der Wirkoberfläche und damit die Abscheiderate durch die Verwendung der zusätzlichen Hülsen sinkt.

Der vorliegenden Erfindung liegt die Erkenntnis zu Grunde, dass sich Stabmagnete sehr leicht mittels eines Staubsaugers reinigen lassen, wenn die wasserabsorbierenden Polymerpartikel ein Tensid enthalten. Die Verwendung zusätzlicher, lösbarer Hülsen zur verbesserten Reinigung ist nicht mehr notwendig.

Die Temperatur des Produktmassenstroms beträgt vorzugsweise von 30 bis 90°C, besonders bevorzugt von 40 bis 80°C, ganz besonders bevorzugt von 50 bis 70°C.

Der Feuchtegehalt der wasserabsorbierenden Polymerpartikel im Produktmassenstrom beträgt vorzugsweise von 1 bis 20 Gew.-%, besonders bevorzugt von 2 bis 10 Gew.-%, ganz besonders bevorzugt von 2,5 bis 5 Gew.-%, und wird gemäß der von der EDANA empfohlenen Testmethode Nr. WSP 230.2-05 "Moisture Content" bestimmt.

Die Verwendung von Magnetabscheidern bei der Herstellung wasserabsorbierender Polymerpartikel führt infolge der zusätzlichen mechanischen Belastung zu vermehrtem Abrieb. Die Magnetabscheidung ist häufig der letzte Verfahrensschritt bei der Herstellung wasserabsorbierender Polymerpartikel. Daher wird dieser Abrieb nicht mehr abgetrennt und verschlechtert somit die Produkteigenschaften.

Die mechanische Stabilität der wasserabsorbierenden Polymerpartikel kann durch Temperierung und zusätzlich durch Einstellung einer Mindestfeuchte deutlich erhöht werden. Zu hohe Temperaturen schwächen dagegen das Magnetfeld.

Zu hohe Feuchtegehalte in Verbindung mit zu hohen Temperaturen sind dagegen zu meiden, da die Klebrigkeit der wasserabsorbierenden Polymerpartikel in diesem Fall zunimmt.

Werden die wasserabsorbierenden Polymerpartikel bei höheren Temperaturen, beispielsweise größer 160°C, thermisch nachbehandelt, beispielsweise zur Oberflächennachvernetzung, so weisen die wasserabsorbierenden Polymerpartikel einen sehr niedrigen Feuchtegehalt auf. Daher ist es vorteilhaft den Feuchtegehalt der wasserabsorbierenden Polymerpartikel vor dem Magnetabscheider zu erhöhen.

Der Feuchtegehalt wird üblicherweise durch Zusatz von Wasser oder wässrigen Lösungen in geeigneten Mischeinrichtungen erhöht. Eine möglicherweise auftretende Verklumpungsneigung der wasserabsorbierenden Polymerpartikel kann durch eine höhere Drehzahl der verwendeten Mischwerkzeuge verhindert werden. Weitere Einflussgrößen der Verklumpungsneigung sind die Temperatur der wasserabsorbierenden Polymerpartikel und die Ionenstärke der zur Befeuchtung eingesetzten wässrigen Lösung. Die Verklumpungsneigung nimmt mit steigender Temperatur und steigender Ionenstärke ab.

Die verwendeten Stabmagnete weisen üblicherweise eine magnetische Flussdichte von mindestens 0,6 T, besonders bevorzugt von mindestens 0,9 T, ganz besonders bevorzugt von mindestens 1,1 T, auf.

Die Stabmagnete des Magnetabscheiders befinden sich üblicherweise direkt in der Produktstromleitung. Die Produktstromleitung unterliegt keinen Beschränkungen. Geeignete Produktstromleitungen sind beispielsweise Rohrleitungen, in denen die wasserabsorbierenden Polymerpartikel pneumatisch oder gravimetrisch gefördert werden. Der Durchmesser der Produktstromleitung beträgt vorzugsweise von 5 bis 50 cm, besonders bevorzugt von 15 bis 40 cm, ganz besonders bevorzugt von 20 bis 35 cm.

Vorteilhaft wird der Magnetabscheider von oben nach unten durchströmt. Hierbei ist es möglich, dass die wasserabsorbierenden Polymerpartikel im Wesentlichen aufgrund ihres Eigengewichtes durch den Magnetabscheider geführt werden.

Der Abstand der Stabmagnete ist so zu wählen, dass ein ausreichender Spalt für den Produktstrom zur Verfügung steht und andererseits eine ausreichende Abscheiderate gewährleistet ist.

Der Durchmesser der Stabmagnete beträgt vorzugsweise von 5 bis 30 mm, besonders bevorzugt von 5 bis 20 mm, ganz besonders bevorzugt von 5 bis 10 mm. Die Spaltbreite zwischen den Stabmagneten beträgt vorzugsweise von 5 bis 30 mm, besonders bevorzugt von 8 bis 25 mm, ganz besonders bevorzugt von 10 bis 20 mm.

Vorteilhaft werden mehrere Stabmagnete nebeneinander und versetzt übereinander angeordnet. Dadurch wird die Abscheiderate des Magnetabscheiders erhöht.

Die Flächenbelastung des Magnetabscheiders beträgt vorzugsweise von 2 bis 15 $g/cm^2s$, besonders bevorzugt von 4 bis 12 $g/cm^2s$, ganz besonders bevorzugt von 6 bis 8 $g/cm^2s$. Die Flächenbelastung ist die Produktmasse in g, die die Querschnittsfläche von 1 $cm^2$ senkrecht zur Produktstromrichtung in 1 s passiert.

Bei einer zu niedrigen Flächenbelastung können metallische Verunreinigungen in laminarer Strömung um die Stabmagnete herumgeführt werden. Bei einer zu hohen Flächenbelastung können bereits abgeschiedene metallische Verunreinigungen wieder von den Stabmagneten heruntergeschlagen werden.

Der Produktmassenstrom kann zusätzlich noch einen Gasstrom umfassen, beispielsweise Luft oder technischer Stickstoff. Der Gasstrom weist einen Wassergehalt von vorzugsweise weniger als 5 g/kg, besonders bevorzugt von weniger als 4 g/kg, ganz besonders bevorzugt von weniger als 3 g/kg, auf.

Eine zu hohe Geschwindigkeit des Produktmassenstroms senkt ebenfalls die Abscheiderate des Magnetabscheiders.

Vorteilhaft wird im erfindungsgemäßen Verfahren zusätzlich ein Wirbelstromdetektor eingesetzt. Wirbelstromdetektoren sind zur Erfassung ferritischer und nicht-ferritischer metallischer Verunreinigungen geeignet. Derartige Verunreinigungen können beispielsweise durch Abrieb produktberührter Anlagenteile aus ferritischen bzw. austenitischen Stählen entstehen.

Geeignete Werkstoffe für die produktberührten Anlagenteile sind austenitische Stähle mit beispielsweise mindestens 0,08 Gew.-% Kohlenstoff. Vorteilhaft enthalten die austenitischen Stähle neben Eisen, Kohlenstoff, Chrom, Nickel und optional Molybdän noch weitere Legierungsbestandteile, vorzugsweise Niob oder Titan.

Die bevorzugten Werkstoffe sind Werksstoffe mit der Werkstoffnummer 1.45xx gemäß der DIN EN 10020, wobei xx eine natürliche Zahl zwischen 0 und 99 sein kann. Besonders bevorzugte Werkstoffe sind die Stähle mit den Werkstoffnummern 1.4541 und 1.4571, insbesondere Stahl mit der Werkstoffnummer 1.4541.

Ein Wirbelstromdetektor erzeugt ein magnetisches Wechselfeld, wodurch in Metallen ein Magnetfeld aufgebaut wird, das dem vom Wirbelstromdetektor erzeugten Magnetfeld entgegengesetzt ist, wodurch das ursprüngliche magnetische Wechselfeld messbar verändert wird.

Der Wirbelstromdetektor kann mittels eines Testkörpers aus einem nicht-ferritischen metallischen Werkstoff, beispielsweise einer Edelstahlkugel mit einem Durchmesser von 3,5 mm, geeicht werden.

Das Passstück für den Wirbelstromdetektor in der Produktstromleitung ist selbstverständlich aus einem nichtmetallischen Werkstoff, vorzugsweise Keramik.

In dem erfindungsgemäßen Verfahren kann der zusätzliche Wirbelstromdetektor an verschiedenen Stellen eingesetzt werden. Besonders vorteilhaft ist aber der Einsatz unmittelbar vor dem Produktsilo oder der Abfüllstation.

Die mittels des Wirbelstromdetektors detektierten ferritischen und nicht-ferritischen metallischen Verunreinigungen können ausgeschleust werden, beispielsweise mittels einer in der Produktleitung vorhandenen Weiche in einen off-spec Silo.

Die wasserabsorbierenden Polymerpartikel werden durch Polymerisation einer Monomerlösung oder -suspension hergestellt und sind üblicherweise wasserunlöslich.

Die Monomeren a) sind vorzugsweise wasserlöslich, d.h. die Löslichkeit in Wasser bei 23°C beträgt typischerweise mindestens 1 g/100 g Wasser, vorzugsweise mindestens 5 g/100 g Wasser, besonders bevorzugt mindestens 25 g/100 g Wasser, ganz besonders bevorzugt mindestens 35 g/100 g Wasser.

Geeignete Monomere a) sind beispielsweise ethylenisch ungesättigte Carbonsäuren, wie Acrylsäure, Methacrylsäure, und Itaconsäure. Besonders bevorzugte Monomere sind Acrylsäure und Methacrylsäure. Ganz besonders bevorzugt ist Acrylsäure.

Weitere geeignete Monomere a) sind beispielsweise ethylenisch ungesättigte Sulfonsäuren, wie Styrolsulfonsäure und 2-Acrylamido-2-methylpropansulfonsäure (AMPS).

Verunreinigungen können einen erheblichen Einfluss auf die Polymerisation haben. Daher sollten die eingesetzten Rohstoffe eine möglichst hohe Reinheit aufweisen. Es ist daher oft vorteilhaft die Monomeren a) speziell zu reinigen. Geeignete Reinigungsverfahren werden beispielsweise in der WO 2002/055469 A1, der WO 2003/078378 A1 und der WO 2004/035514 A1 beschrieben. Ein geeignetes Monomer a) ist beispielsweise eine gemäß WO 2004/035514 A1 gereinigte Acrylsäure mit 99,8460 Gew.-% Acrylsäure, 0,0950 Gew.-% Essigsäure, 0,0332 Gew.-% Wasser, 0,0203 Gew.-% Propionsäure, 0,0001 Gew.-% Furfurale, 0,0001 Gew.-% Maleinsäureanhydrid, 0,0003 Gew.-% Diacrylsäure und 0,0050 Gew.-% Hydrochinonmonomethylether.

Der Anteil an Acrylsäure und/oder deren Salzen an der Gesamtmenge der Monomeren a) beträgt vorzugsweise mindestens 50 mol-%, besonders bevorzugt mindestens 90 mol-%, ganz besonders bevorzugt mindestens 95 mol-%.

Die Monomere a) enthalten üblicherweise Polymerisationsinhibitoren, vorzugsweise Hydrochinonhalbether, als Lagerstabilisator.

Die Monomerlösung enthält vorzugsweise bis zu 250 Gew.-ppm, bevorzugt höchstens 130 Gew.-ppm, besonders bevorzugt höchstens 70 Gew.-ppm, bevorzugt mindesten 10 Gew.-ppm, besonders bevorzugt mindesten 30 Gew.-ppm, insbesondere um 50 Gew.-ppm, Hydrochinonhalbether, jeweils bezogen auf das unneutralisierte Monomer a). Beispielsweise kann zur Herstellung der Monomerlösung ein ethylenisch ungesättigtes, säuregruppentragendes Monomer mit einem entsprechenden Gehalt an Hydrochinonhalbether verwendet werden.

Bevorzugte Hydrochinonhalbether sind Hydrochinonmonomethylether (MEHQ) und/oder alpha-Tocopherol (Vitamin E).

Geeignete Vernetzer b) sind Verbindungen mit mindestens zwei zur Vernetzung geeigneten Gruppen. Derartige Gruppen sind beispielsweise ethylenisch ungesättigte Gruppen, die in die Polymerkette radikalisch einpolymerisiert werden können, und funktionelle Gruppen, die mit den Säuregruppen des Monomeren a) kovalente Bindungen ausbilden können. Weiterhin sind auch polyvalente Metallsalze, die mit mindestens zwei Säuregruppen des Monomeren a) koordinative Bindungen ausbilden können, als Vernetzer b) geeignet.

Vernetzer b) sind vorzugsweise Verbindungen mit mindestens zwei polymerisierbaren Gruppen, die in das Polymernetzwerk radikalisch einpolymerisiert werden können. Geeignete Vernetzer b) sind beispielsweise Ethylenglykoldimethacrylat, Diethylenglykoldiacrylat, Polyethylenglykoldiacrylat, Allylmethacrylat, Trimethylolpropantriacrylat, Triallylamin, Tetraallylammoniumchlorid, Tetraallyloxyethan, wie in EP 0 530 438 A1 beschrieben, Di- und Triacrylate, wie in EP 0 547 847 A1, EP 0 559 476 A1, EP 0 632 068 A1, WO 93/21237 A1, WO 2003/104299 A1, WO 2003/104300 A1, WO 2003/104301 A1 und DE 103 31 450 A1 beschrieben, gemischte Acrylate, die neben Acrylatgruppen weitere ethylenisch ungesättigte Gruppen enthalten, wie in DE 103 31 456 A1 und DE 103 55 401 A1 beschrieben, oder Vernetzermischungen, wie beispielsweise in DE 195 43 368 A1, DE 196 46 484 A1, WO 90/15830 A1 und WO 2002/032962 A2 beschrieben.

Bevorzugte Vernetzer b) sind Pentaerythrittriallylether, Tetraallyloxyethan, Methylenbismethacrylamid, 15-fach ethoxiliertes Trimethylolpropantriacrylat, Polyethylenglykoldiacrylat, Trimethylolpropantriacrylat und Triallylamin.

Ganz besonders bevorzugte Vernetzer b) sind die mit Acrylsäure oder Methacrylsäure zu Di- oder Triacrylaten veresterten mehrfach ethoxylierten und/oder propoxylierten Glyzerine, wie sie beispielsweise in WO 2003/104301 A1 beschrieben sind. Besonders vorteilhaft sind Di- und/oder Triacrylate des 3- bis 10-fach ethoxylierten Glyzerins. Ganz besonders bevorzugt sind Di- oder Triacrylate des 1- bis 5-fach ethoxylierten und/oder propoxylierten Glyzerins. Am meisten bevorzugt sind die Triacrylate des 3-bis 5-fach ethoxylierten und/oder propoxylierten Glyzerins, insbesondere das Triacrylat des 3-fach ethoxylierten Glyzerins.

Die Menge an Vernetzer b) beträgt vorzugsweise 0,05 bis 1,5 Gew.-%, besonders bevorzugt 0,1 bis 1 Gew.-%, ganz besonders bevorzugt 0,3 bis 0,6 Gew.-%, jeweils bezogen auf Monomer a). Mit steigendem Vernetzergehalt sinkt die Zentrifugenretentionskapazität (CRC) und die Absorption unter einem Druck von 21,0 g/cm$^2$ durchläuft ein Maximum.

Als Initiatoren c) können sämtliche unter den Polymerisationsbedingungen Radikale erzeugende Verbindungen eingesetzt werden, beispielsweise thermische Initiatoren, Redox-Initiatoren, Photoinitiatoren. Geeignete Redox-Initiatoren sind Natriumperoxodisulfat/Ascorbinsäure, Wasserstoffperoxid/Ascorbinsäure, Natriumperoxodisulfat/Natriumbisulfit und Wasserstoffperoxid/Natriumbisulfit. Vorzugsweise werden Mischungen aus thermischen Initiatoren und Redox-Initiatoren eingesetzt, wie Natriumperoxodisulfat/Wasserstoffperoxid/Ascorbinsäure. Als reduzierende Komponente wird aber vorzugsweise ein Gemisch aus dem Natriumsalz der 2-Hydroxy-2-sulfinatoessigsäure, dem Dinatriumsalz der 2-Hydroxy-2-sulfonatoessigsäure und Natriumbisulfit eingesetzt. Derartige Gemische sind als Brüggolite® FF6 und Brüggolite® FF7 (Brüggemann Chemicals; Heilbronn; DE) erhältlich.

Mit den ethylenisch ungesättigten, säuregruppentragenden Monomeren a) copolymerisierbare ethylenisch ungesättigte Monomere d) sind beispielsweise Acrylamid, Methacrylamid, Hydroxyethylacrylat, Hydroxyethylmethacrylat, Dimethylaminoethylmethacrylat, Dimethylaminoethylacrylat, Dimethylaminopropylacrylat, Diethylaminopropylacrylat, Dimethylaminoethylmethacrylat, Diethylaminoethylmethacrylat.

Als wasserlösliche Polymere e) können Polyvinylalkohol, Polyvinylpyrrolidon, Stärke, Stärkederivate, modifizierte Cellulose, wie Methylcellulose oder Hydroxyethylcellulose, Gelatine, Polyglykole oder Polyacrylsäuren, vorzugsweise Stärke, Stärkederivate und modifizierte Cellulose, eingesetzt werden.

Üblicherweise wird eine wässrige Monomerlösung verwendet. Der Wassergehalt der Monomerlösung beträgt vorzugsweise von 40 bis 75 Gew.-%, besonders bevorzugt von 45 bis 70 Gew.-%, ganz besonders bevorzugt von 50 bis 65 Gew.-%. Es ist auch möglich Monomersuspensionen, d.h. Monomerlösungen mit überschüssigem Monomer a), beispielsweise Natriumacrylat, einzusetzen. Mit steigendem Wassergehalt steigt der Energieaufwand bei der anschließenden Trocknung und mit sinkendem Wassergehalt kann die Polymerisationswärme nur noch ungenügend abgeführt werden.

Die bevorzugten Polymerisationsinhibitoren benötigen für eine optimale Wirkung gelösten Sauerstoff. Daher kann die Monomerlösung vor der Polymerisation durch Inertisierung, d.h. Durchströmen mit einem inerten Gas, vorzugsweise Stickstoff oder Kohlendioxid, von gelöstem Sauerstoff befreit und der in der Monomerlösung enthaltende Polymerisationsinhibitor deaktiviert werden. Vorzugsweise wird der Sauerstoffgehalt der Monomerlösung vor der Polymerisation auf weniger als 1 Gew.-ppm, besonders bevorzugt auf weniger als 0,5 Gew.-ppm, ganz besonders bevorzugt auf weniger als 0,1 Gew.-ppm, gesenkt.

Geeignete Reaktoren sind beispielsweise Knetreaktoren oder Bandreaktoren. Im Kneter wird das bei der Polymerisation einer wässrigen Monomerlösung oder -suspension entstehende Polymergel durch beispielsweise gegenläufige Rührwellen kontinuierlich zerkleinert, wie in WO 2001/038402 A1 beschrieben. Die Polymerisation auf dem Band wird beispielsweise in DE 38 25 366 A1 und US 6,241,928 beschrieben. Bei der Polymerisation in einem Bandreaktor entsteht ein Polymergel, das in einem weiteren Verfahrensschritt zerkleinert werden muss, beispielsweise in einem Extruder oder Kneter.

Es ist aber auch möglich eine wässrige Monomerlösung zu vertropfen und die erzeugten Tropfen in einem erwärmten Trägergasstrom zu polymerisieren. Hierbei können die Verfahrensschritte Polymerisation und Trocknung zusammengefasst werden, wie in WO 2008/040715 A2 und WO 2008/052971 A1 beschrieben.

Die Säuregruppen der erhaltenen Polymergele sind üblicherweise teilweise neutralisiert. Die Neutralisation wird vorzugsweise auf der Stufe der Monomeren durchgeführt. Dies geschieht üblicherweise durch Einmischung des Neutralisationsmittels als wässrige Lösung oder bevorzugt auch als Feststoff. Der Neutralisationsgrad beträgt vorzugsweise von 25 bis 95 mol-%, besonders bevorzugt von 30 bis 80 mol-%, ganz besonders bevorzugt von 40 bis 75 mol-%, wobei die üblichen Neutralisationsmittel verwendet werden können, vorzugsweise Alkalimetallhydroxide, Alkalimetalloxide, Alkalimetallkarbonate oder Alkalimetallhydrogenkarbonate sowie deren Mischungen. Statt Alkalimetallsalzen können auch Ammoniumsalze verwendet werden. Natrium und Kalium sind als Alkalimetalle besonders bevorzugt, ganz besonders bevorzugt sind jedoch Natriumhydroxid, Natriumkarbonat oder Natriumhydrogenkarbonat sowie deren Mischungen.

Es ist aber auch möglich die Neutralisation nach der Polymerisation auf der Stufe des bei der Polymerisation entstehenden Polymergels durchzuführen. Weiterhin ist es möglich bis zu 40 mol-%, vorzugsweise 10 bis 30 mol-%, besonders bevorzugt 15 bis 25 mol-%, der Säuregruppen vor der Polymerisation zu neutralisieren indem ein Teil des Neutralisationsmittels bereits der Monomerlösung zugesetzt und der gewünschte Endneutralisationsgrad erst nach der Polymerisation auf der Stufe des Polymergels eingestellt wird. Wird das Polymergel zumindest teilweise nach der Polymerisation neutralisiert, so wird das Polymergel vorzugsweise mechanisch zerkleinert, beispielsweise mittels eines Extruders, wobei das Neutralisationsmittel aufgesprüht, übergestreut oder aufgegossen und dann sorgfältig untergemischt werden kann. Dazu kann die erhaltene Gelmasse noch mehrmals zur Homogenisierung extrudiert werden.

Das Polymergel wird dann vorzugsweise mit einem Bandtrockner getrocknet bis der Restfeuchtegehalt vorzugsweise 0,5 bis 15 Gew.-%, besonders bevorzugt 1 bis 10 Gew.-%, ganz besonders bevorzugt 2 bis 8 Gew.-%, beträgt, wobei der Restfeuchtegehalt gemäß der von der EDANA empfohlenen Testmethode Nr. WSP 230.2-05 "Moisture Content" bestimmt wird. Bei einer zu hohen Restfeuchte weist das getrocknete Polymergel eine zu niedrige Glasübergangstemperatur $T_g$ auf und ist nur schwierig weiter zu verarbeiten. Bei einer zu niedrigen Restfeuchte ist das getrocknete Polymergel zu spröde und in den anschließenden Zerkleinerungsschritten fallen unerwünscht große Mengen an Polymerpartikeln mit zu niedriger Partikelgröße (Feinkorn) an. Der Feststoffgehalt des Gels beträgt vor der Trocknung vorzugsweise von 25 und 90 Gew.-%, besonders bevorzugt von 35 bis 70 Gew.-%, ganz besonders bevorzugt von 40 bis 60 Gew.-%. Wahlweise kann zur Trocknung aber auch ein Wirbelbetttrockner oder ein Schaufeltrockner verwendet werden.

Das getrocknete Polymergel wird hiernach gemahlen und klassiert, wobei zur Mahlung üblicherweise ein- oder mehrstufige Walzenstühle, bevorzugt zwei- oder dreistufige Walzenstühle, Stiftmühlen, Hammermühlen oder Schwingmühlen, eingesetzt werden können.

Die mittlere Partikelgröße der als Produktfraktion abgetrennten Polymerpartikel beträgt vorzugsweise mindestens 200 μm, besonders bevorzugt von 250 bis 600 μm, ganz besonders von 300 bis 500 μm. Die mittlere Partikelgröße der Produktfraktion kann mittels der von der EDANA empfohlenen Testmethode Nr. WSP 220.2-05 "Partikel Size Distribution" ermittelt werden, wobei die Massenanteile der Siebfraktionen kumuliert aufgetragen werden und die mittlere Partikelgröße graphisch bestimmt wird. Die mittlere Partikelgröße ist hierbei der Wert der Maschenweite, der sich für kumulierte 50 Gew.-% ergibt.

Der Anteil an Partikeln mit einer Partikelgröße von mindestens 150 μm beträgt vorzugsweise mindestens 90 Gew.-%, besonders bevorzugt mindesten 95 Gew.-%, ganz besonders bevorzugt mindestens 98 Gew.-%.

Polymerpartikel mit zu niedriger Partikelgröße senken die Permeabilität (SFC). Daher sollte der Anteil zu kleiner Polymerpartikel (Feinkorn) niedrig sein.

Zu kleine Polymerpartikel werden daher üblicherweise abgetrennt und in das Verfahren rückgeführt. Die geschieht vorzugsweise vor, während oder unmittelbar nach der Polymerisation, d.h. vor der Trocknung des Polymergels. Die zu kleinen Polymerpartikel können vor oder während der Rückführung mit Wasser und/oder wässrigem Tensid angefeuchtet werden.

Es ist auch möglich in späteren Verfahrensschritten zu kleine Polymerpartikel abzutrennen, beispielsweise nach der Oberflächennachvernetzung oder einem anderen Beschichtungsschritt. In diesem Fall sind die rückgeführten zu kleinen Polymerpartikel oberflächennachvernetzt bzw. anderweitig beschichtet, beispielsweise mit pyrogener Kieselsäure.

Wird zur Polymerisation ein Knetreaktor verwendet, so werden die zu kleinen Polymerpartikel vorzugsweise während des letzten Drittels der Polymerisation zugesetzt.

Werden die zu kleinen Polymerpartikel sehr früh zugesetzt, beispielsweise bereits zur Monomerlösung, so wird dadurch die Zentrifugenretentionskapazität (CRC) der erhaltenen wasserabsorbierenden Polymerpartikel gesenkt. Dies kann aber beispielsweise durch Anpassung der Einsatzmenge an Vernetzer b) kompensiert werden.

Werden die zu kleinen Polymerpartikel sehr spät zugesetzt, beispielsweise erst in einem dem Polymerisationsreaktor nachgeschalteten Apparat, beispielsweise einem Extruder, so lassen sich die zu kleinen Polymerpartikel nur noch schwer in das erhaltene Polymergel einarbeiten. Unzureichend eingearbeitete zu kleine Polymerpartikel lösen sich aber während der Mahlung wieder von dem getrockneten Polymergel, werden beim Klassieren daher erneut abgetrennt und erhöhen die Menge rückzuführender zu kleiner Polymerpartikel.

Der Anteil an Partikeln mit einer Partikelgröße von höchstens 850 μm, beträgt vorzugsweise mindestens 90 Gew.-%, besonders bevorzugt mindesten 95 Gew.-%, ganz besonders bevorzugt mindestens 98 Gew.-%.

Vorteilhaft beträgt der Anteil an Partikeln mit einer Partikelgröße von höchstens 600 μm, beträgt vorzugsweise mindestens 90 Gew.-%, besonders bevorzugt mindesten 95 Gew.-%, ganz besonders bevorzugt mindestens 98 Gew.-%.

Polymerpartikel mit zu großer Partikelgröße senken die Anquellgeschwindigkeit. Daher sollte der Anteil zu großer Polymerpartikel ebenfalls niedrig sein.

Zu große Polymerpartikel werden daher üblicherweise abgetrennt und in die Mahlung des getrockneten Polymergels rückgeführt.

Die Polymerpartikel können zur weiteren Verbesserung der Eigenschaften oberflächennachvernetzt werden. Geeignete Oberflächennachvernetzer sind Verbindungen, die Gruppen enthalten, die mit mindestens zwei Carboxylatgruppen der Polymerpartikel kovalente Bindungen bilden können. Geeignete Verbindungen sind beispielsweise polyfunktionelle Amine, polyfunktionelle Amidoamine, polyfunktionelle Epoxide, wie in EP 0 083 022 A2, EP 0 543 303 A1 und EP 0 937 736 A2 beschrieben, di- oder polyfunktionelle Alkohole, wie in DE 33 14 019 A1, DE 35 23 617 A1 und EP 0 450 922 A2 beschrieben, oder β-Hydroxyalkylamide, wie in DE 102 04 938 A1 und US 6,239,230 beschrieben.

Des weiteren sind in DE 40 20 780 C1 zyklische Karbonate, in DE 198 07 502 A1 2-Oxazolidon und dessen Derivate, wie 2-Hydroxyethyl-2-oxazolidon, in DE 198 07 992 C[1] Bis- und Poly-2-oxazolidinone, in DE 198 54 573 A1 2-Oxotetrahydro-1,3-oxazin und dessen Derivate, in DE 198 54 574 A1 N-Acyl-2-Oxazolidone, in DE 102 04 937 A1 zyklische Harnstoffe, in DE 103 34 584 A1 bizyklische Amidacetale, in EP 1 199 327 A2 Oxetane und zyklische Harnstoffe und in WO 2003/031482 A1 Morpholin-2,3-dion und dessen Derivate als geeignete Oberflächennachvernetzer beschrieben.

Bevorzugte Oberflächennachvernetzer sind Glyzerin, Ethylenkarbonat, Ethylenglykoldiglycidylether, Umsetzungsprodukte von Polyamiden mit Epichlorhydrin und Gemische aus Propylenglykol und 1,4-Butandiol.

Ganz besonders bevorzugte Oberflächennachvernetzer sind 2-Hydroxyethyloxazolidin-2-on, Oxazolidin-2-on und 1,3-Propandiol.

Weiterhin können auch Oberflächennachvernetzer eingesetzt werden, die zusätzliche polymerisierbare ethylenisch ungesättigte Gruppen enthalten, wie in DE 37 13 601 A1 beschrieben

Die Menge an Oberflächennachvernetzer beträgt vorzugsweise 0,001 bis 2 Gew.-%, besonders bevorzugt 0,02 bis 1 Gew.-%, ganz besonders bevorzugt 0,05 bis 0,2 Gew.-%, jeweils bezogen auf die Polymerpartikel.

In einer bevorzugten Ausführungsform der vorliegenden Erfindung werden vor, während oder nach der Oberflächennachvernetzung zusätzlich zu den Oberflächennachvernetzern polyvalente Kationen auf die Partikeloberfläche aufgebracht.

Die im erfindungsgemäßen Verfahren einsetzbaren polyvalenten Kationen sind beispielsweise zweiwertige Kationen, wie die Kationen von Zink, Magnesium, Kalzium,

Eisen und Strontium, dreiwertige Kationen, wie die Kationen von Aluminium, Eisen, Chrom, Seltenerden und Mangan, vierwertige Kationen, wie die Kationen von Titan und Zirkonium. Als Gegenion sind Chlorid, Bromid, Sulfat, Hydrogensulfat, Karbonat, Hydrogenkarbonat, Nitrat, Phosphat, Hydrogenphosphat, Dihydrogenphosphat und Carboxylat, wie Acetat und Laktat, möglich. Aluminiumsulfat und Aluminiumlaktat sind bevorzugt. Außer Metallsalzen können auch Polyamine als polyvalente Kationen eingesetzt werden.

Die Einsatzmenge an polyvalentem Kation beträgt beispielsweise 0,001 bis 1,5 Gew.-%, vorzugsweise 0,005 bis 1 Gew.-%, besonders bevorzugt 0,02 bis 0,8 Gew.-%. jeweils bezogen auf die Polymerpartikel.

Die Oberflächennachvernetzung wird üblicherweise so durchgeführt, dass eine Lösung des Oberflächennachvernetzers auf die getrockneten Polymerpartikel aufgesprüht wird. Im Anschluss an das Aufsprühen werden die mit Oberflächennachvernetzer beschichteten Polymerpartikel thermisch getrocknet, wobei die Oberflächennachvernetzungsreaktion sowohl vor als auch während der Trocknung stattfinden kann.

Das Aufsprühen einer Lösung des Oberflächennachvernetzers wird vorzugsweise in Mischern mit bewegten Mischwerkzeugen, wie Schneckenmischer, Scheibenmischer und Schaufelmischer, durchgeführt werden. Besonders bevorzugt sind Horizontalmischer, wie Schaufelmischer, ganz besonders bevorzugt sind Vertikalmischer. Die Unterscheidung in Horizontalmischer und Vertikalmischer erfolgt über die Lagerung der Mischwelle, d.h. Horizontalmischer haben eine horizontal gelagerte Mischwelle und Vertikalmischer haben eine vertikal gelagerte Mischwelle. Geeignete Mischer sind beispielsweise Horizontale Pflugschar® Mischer (Gebr. Lödige Maschinenbau GmbH; Paderborn; DE), Vrieco-Nauta Continuous Mixer (Hosokawa Micron BV; Doetinchem; NL), Processall Mixmill Mixer (Processall Incorporated; Cincinnati; US) und Schugi Flexomix® (Hosokawa Micron BV; Doetinchem; NL). Es ist aber auch möglich die Oberflächennachvernetzerlösung in einem Wirbelbett aufzusprühen.

Die Oberflächennachvernetzer werden typischerweise als wässrige Lösung eingesetzt. Über den Gehalt an nichtwässrigem Lösungsmittel bzw. Gesamtlösungsmittelmenge kann die Eindringtiefe des Oberflächennachvernetzers in die Polymerpartikel eingestellt werden.

Wird ausschließlich Wasser als Lösungsmittel verwendet, so wird vorteilhaft ein Tensid zugesetzt. Dadurch wird das Benetzungsverhalten verbessert und die Verklumpungsneigung vermindert. Vorzugsweise werden aber Lösungsmittelgemische eingesetzt, beispielsweise Isopropanol/Wasser, 1,3-Propandiol/Wasser und Propylenglykol/Wasser, wobei das Mischungsmassenverhältnis vorzugsweise von 20:80 bis 40:60 beträgt.

Die thermische Trocknung wird vorzugsweise in Kontakttrocknern, besonders bevorzugt Schaufeltrocknern, ganz besonders bevorzugt Scheibentrocknern, durchgeführt. Geeignete Trockner sind beispielsweise Hosokawa Bepex® Horizontal Paddle Dryer (Hosokawa Micron GmbH; Leingarten; DE), Hosokawa Bepex® Disc Dryer (Hosokawa Micron GmbH; Leingarten; DE) und Nara Paddle Dryer (NARA Machinery Europe; Frechen; DE). Überdies können auch Wirbelschichttrockner eingesetzt werden.

Die Trocknung kann im Mischer selbst erfolgen, durch Beheizung des Mantels oder Einblasen von Warmluft. Ebenso geeignet ist ein nachgeschalteter Trockner, wie beispielsweise ein Hordentrockner, ein Drehrohrofen oder eine beheizbare Schnecke. Besonders vorteilhaft wird in einem Wirbelschichttrockner gemischt und getrocknet.

Bevorzugte Trocknungstemperaturen liegen im Bereich 100 bis 250°C, bevorzugt 120 bis 220°C, besonders bevorzugt 130 bis 210°C, ganz besonders bevorzugt 150 bis 200°C. Die bevorzugte Verweilzeit bei dieser Temperatur im Reaktionsmischer oder Trockner beträgt vorzugsweise mindestens 10 Minuten, besonders bevorzugt mindestens 20 Minuten, ganz besonders bevorzugt mindestens 30 Minuten, und üblicherweise höchstens 60 Minuten.

Anschließend können die oberflächennachvernetzten Polymerpartikel erneut klassiert werden, wobei zu kleine und/oder zu große Polymerpartikel abgetrennt und in das Verfahren rückgeführt werden.

Die oberflächennachvernetzten Polymerpartikel können zur weiteren Verbesserung der Eigenschaften beschichtet oder nachbefeuchtet werden. Geeignete Beschichtungen zur Verbesserung der Anquellgeschwindigkeit sowie der Permeabilität (SFC) sind beispielsweise anorganische inerte Substanzen, wie wasserunlösliche Metallsalze, organische Polymere, kationische Polymere sowie zwei- oder mehrwertige Metallkationen. Geeignete Beschichtungen zur Staubbindung sind beispielsweise Polyole. Geeignete Beschichtungen gegen die unerwünschte Verbackungsneigung der Polymerpartikel sind beispielsweise pyrogene Kieselsäure, wie Aerosil® 200, und Tenside, wie Span® 20.

Die gemäß dem erfindungsgemäßen Verfahren hergestellten wasserabsorbierenden Polymerpartikel weisen einen Feuchtegehalt von vorzugsweise 0 bis 15 Gew.-%, besonders bevorzugt 0,2 bis 10 Gew.-%, ganz besonders bevorzugt 0,5 bis 8 Gew.-%, auf, wobei der Wassergehalt gemäß der von der EDANA empfohlenen Testmethode Nr. WSP 230.2-05 "Moisture Content" bestimmt wird.

Die gemäß dem erfindungsgemäßen Verfahren hergestellten wasserabsorbierenden Polymerpartikel weisen eine Zentrifugenretentionskapazität (CRC) von typischerweise mindestens 15 g/g, vorzugsweise mindestens 20 g/g, bevorzugt mindestens 22 g/g, besonders bevorzugt mindestens 24 g/g, ganz besonders bevorzugt mindestens 26 g/g, auf. Die Zentrifugenretentionskapazität (CRC) der wasserabsorbierenden Polymerpartikel beträgt üblicherweise weniger als 60 g/g. Die Zentrifugenretentionskapazität (CRC) wird gemäß der von der EDANA empfohlenen Testmethode Nr. WSP 241.2-05 "Centrifuge Retention Capacity" bestimmt.

Die gemäß dem erfindungsgemäßen Verfahren hergestellten wasserabsorbierenden Polymerpartikel weisen eine Absorption unter einem Druck von 49,2 g/cm$^2$ von typischerweise mindestens 15 g/g, vorzugsweise mindestens 20 g/g, bevorzugt mindestens 22 g/g, besonders bevorzugt mindestens 24 g/g, ganz besonders bevorzugt mindestens 26 g/g, auf. Die Absorption unter einem Druck von 49,2 g/cm$^2$ der wasserabsorbierenden Polymerpartikel beträgt üblicherweise weniger als 35 g/g. Die Absorption unter einem Druck von 49,2 g/cm$^2$ wird analog der von der EDANA empfohlenen Testmethode Nr. WSP 242.2-05 "Absorption under Pressure" bestimmt, wobei statt eines Drucks von 21,0 g/cm$^2$ ein Druck von 49,2 g/cm$^2$ eingestellt wird.

Die wasserabsorbierenden Polymerpartikel werden mittels der nachfolgend beschriebenen Testmethoden geprüft.

Methoden:

Die Messungen sollten, wenn nicht anders angegeben, bei einer Umgebungstemperatur von 23 $\pm$ 2 °C und einer relativen Luftfeuchte von 50 $\pm$ 10 % durchgeführt werden. Die wasserabsorbierenden Polymerpartikel werden vor der Messung gut durchmischt.

Flüssigkeitsweiterleitung (Saline Flow Conductivity)

Die Flüssigkeitsweiterleitung (SFC) einer gequollenen Gelschicht unter Druckbelastung von 0,3 psi (2070 Pa) wird, wie in EP 0 640 330 A1 beschrieben, als Gel-Layer-Permeability einer gequollenen Gelschicht aus wasserabsorbierenden Polymerpartikeln bestimmt, wobei die in zuvor genannter Patentanmeldung auf Seite 19 und in Figur 8 beschriebene Apparatur dahingehend modifiziert wurde, dass die Glasfritte (40) nicht mehr verwendet wird, der Stempel (39) aus gleichem Kunststoffmaterial besteht wie der Zylinder (37) und jetzt über die gesamte Auflagefläche gleichmäßig verteilt 21 gleichgroße Bohrungen enthält. Die Vorgehensweise sowie Auswertung der Messung bleibt unverändert gegenüber EP 0 640 330 A1. Der Durchfluss wird automatisch erfasst.

Die Flüssigkeitsweiterleitung (SFC) wird wie folgt berechnet:

$$\text{SFC [cm}^3\text{s/g]} = (Fg(t=0) \times L0)/(d \times A \times WP),$$

wobei Fg(t=0) der Durchfluss an NaCl-Lösung in g/s ist, der anhand einer linearen Regressionsanalyse der Daten Fg(t) der Durchflussbestimmungen durch Extrapolation gegen t=0 erhalten wird, L0 die Dicke der Gelschicht in cm, d die Dichte der NaCl-Lösung in g/cm$^3$, A die Fläche der Gelschicht in cm$^2$ und WP der hydrostatische Druck über der Gelschicht in dyn/cm$^2$.

Feuchtegehalt (Moisture Content)

Der Feuchtegehalt der wasserabsorbierenden Polymerpartikel wird gemäß der von der EDANA empfohlenen Testmethode Nr. WSP 230.2-05 "Moisture content" bestimmt.

Zentrifugenretentionskapazität (Centrifuge Retention Capacity)

Die Zentrifugenretentionskapazität (CRC) wird gemäß der von der EDANA empfohlenen Testmethode Nr. WSP 241.2-05 "Centrifuge Retention Capacity" bestimmt.

Absorption unter einem Druck von 49,2 g/cm$^2$ (Absorption under Pressure)

Die Absorption unter einem Druck von 49,2 g/cm$^2$ (AUL0.7psi) wird analog der von der EDANA (European Disposables and Nonwovens Association) empfohlenen Testmethode Nr. WSP 242.2-05 "Absorption under Pressure" bestimmt, wobei statt eines Drucks von 21,0 g/cm$^2$ (AUL0.3psi) ein Druck von 49,2 g/cm$^2$ (AUL0.7psi) eingestellt wird.
Die EDANA-Testmethoden sind beispielsweise erhältlich bei der EDANA, Avenue Eugene Plasky 157, B-1030 Brüssel, Belgien.

Beispiele

Beispiel 1 (Vergleichsbeispiel)

Durch kontinuierliches Mischen von entionisiertem Wasser, 50 gew.-%iger Natronlauge und Acrylsäure wurde eine Acrylsäure/Natriumacrylatlösung hergestellt, so dass der Neutralisationsgrad 71,3 mol-% entsprach. Der Feststoffgehalt der Monomerlösung betrug 38,8 Gew.-%.
Als mehrfach ethylenisch ungesättigter Vernetzer wurde Polyethylenglykol-400-diacrylat (Diacrylat ausgehend von einem Polyethylenglykol mit einem mittleren Molgewicht von 400 g/mol) verwendet. Die Einsatzmenge betrug 2 kg Vernetzer pro t Monomerlösung.
Zur Initiierung der radikalischen Polymerisation wurden pro t Monomerlösung 1,03 kg einer 0,25gew.-%igen wässriger Wasserstoffperoxidlösung, 3,10 kg einer 15gew.-%igen wässrigen Natriumperoxodisulfatlösung und 1,05 kg einer 1gew.-%igen wässrigen Ascorbinsäurelösung eingesetzt.
Der Durchsatz der Monomerlösung betrug 20 t/h. Die Reaktionslösung hatte am Zulauf eine Temperatur von 23,5°C.
Die einzelnen Komponenten wurden in folgenden Mengen kontinuierlich in einen Reaktor vom Typ List Contikneter mit einem Volumen 6,3m$^3$ (LIST AG, Arisdorf, CH) dosiert:

| | |
|---|---|
| 20 t/h | Monomerlösung |
| 40 kg/h | Polyethylenglykol-400-diacrylat |
| 82,6 kg/h | Wasserstoffperoxidlösung/Natriumperoxodisulfatlösung |
| 21 kg/h | Ascorbinsäurelösung |

Zwischen dem Zugabepunkt für den Vernetzer und den Zugabestellen für die Initiatoren wurde die Monomerlösung mit Stickstoff inertisiert.
Es fand nach ca. 50% der Verweilzeit zusätzlich eine Zudosierung von aus dem Herstellungsprozess durch Mahlung und Siebung anfallendem Feinkorn (1000 kg/h) in den Reaktor statt. Die Verweilzeit der Reaktionsmischung im Reaktor betrug 15 Minuten.
Das erhaltene Polymergel wurde auf einen Bandtrockner aufgegeben. Auf dem Bandtrockner wurde das Polymergel kontinuierlich mit einem Luft/Gasgemisch umströmt und getrocknet. Die Verweilzeit im Bandtrockner betrug 37 Minuten.
Das getrocknete Polymergel wurde gemahlen und auf eine Partikelgrößenfraktion von 150 bis 850 μm abgesiebt. Das erhaltene Grundpolymer wurde oberflächennachvernetzt.
In einem Schugi Flexomix® (Hosokawa Micron B.V., Doetinchem, NL) wurde das Grundpolymer mit einer Oberflächennachvernetzerlösung beschichtet und anschlie-βend in einem NARA Paddle Dryer (GMF Gouda, Waddinxveen, NL) 45 Minuten bei 155°C getrocknet.
Es wurden folgende Mengen in den Schugi Flexomix® dosiert:

| | |
|---|---|
| 7,5 t/h | Grundpolymer |
| 308,25 kg/h | Oberflächennachvernetzerlösung |

Die Oberflächennachvernetzerlösung enthielt 2,7 Gew.-% Denacol EX-810 (Ethylenglykoldiglycidylether), 24,3 Gew.-% Propylenglykol und entionisiertes Wasser.
Nach dem Trocken wurde das oberflächennachvernetzte Grundpolymer in einem NARA Paddle-Cooler (GMF Gouda, Waddinxveen, NL) auf ca. 60°C abgekühlt und anschließend erneut auf eine Partikelgrößenfraktion von 150 bis 850 μm abgesiebt.
Die erhaltenen wasserabsorbierenden Polymerpartikel wiese einen Feuchtegehalt von 0,9 Gew.-%, eine Zentrifugenretentionskapazität (CRC) von 30,1 g/g, eine Absorption unter Druck (AUL0.7psi) von 23,0 g/g und eine Flüssigkeitsweiterleitung (SFC) von 45 x $10^{-7}$ cm$^3$s/g.

Der Produktmassenstrom wurde im freien Fall durch einen Magnetabscheider geführt. Der Durchmesser der Produktstromleitung betrug 30 cm. Der Magnetabscheider bestand aus 4 übereinander angeordneten herausnehmbaren Kassetten. Die Stabmagnete waren in jeder Kassette in zwei Reihen versetzt übereinander angeordnet. Die jeweils obere Reihe bestand aus vier Stabmagneten, die jeweils untere aus drei. Der Durchmesser der Stabmagnete betrug 25 mm, die waagerechte Spaltbreite zwischen zwei Stabmagneten betrug 30 mm und die vertikale Spaltbreite zwischen zwei Stabmagneten betrug 30 mm.

Die Stabmagneten ließen sich nur sehr schwer mit einem Staubsauger reinigen.

Beispiel 2

Es wurde verfahren wie unter Beispiel 1. Die Oberflächennachvernetzerlösung enthielt zusätzlich 0,24 Gew.-% Sorbitanmonolaurat (Span® 20, ICI Americas Inc.,Wilmington, US).

Die Stabmagneten ließen sich leicht mit einem Staubsauger reinigen.

## Patentansprüche

1. Verfahren zur Herstellung wasserabsorbierender Polymerpartikel durch Polymerisation einer Monomerlösung oder-suspension, enthaltend

   a) mindestens ein ethylenisch ungesättigtes, säuregruppentragendes Monomer, das zumindest teilweise neutralisiert sein kann,
   b) mindestens einen Vernetzer,
   c) mindestens einen Initiator,
   d) optional ein oder mehrere mit den unter a) genannten Monomeren copolymerisierbare ethylenisch ungesättigte Monomere und
   e) optional ein oder mehrere wasserlösliche Polymere,

   wobei metallische Verunreinigungen aus einem wasserabsorbierende Polymerpartikel enthaltenden Produktmassenstrom mittels eines Magnetabscheiders abgetrennt werden, der Magnetabscheider aus Stabmagneten aufgebaut ist, die Stabmagneten aus einer Hülse und einem in der Hülse befindlichen magnetischem Material bestehen und die Hülse unlösbar mit dem magnetischen Material verbunden ist, **dadurch gekennzeichnet, dass** die Hülsen unmittelbaren Kontakt zu den wasserabsorbierenden Polymerpartikeln haben können und die wasserabsorbierenden Polymerpartikel mindestens ein Tensid enthalten.

2. Verfahren gemäß Anspruch 1, **dadurch gekennzeichnet, dass** der Produktmassenstrom eine Temperatur von 30 bis 90°C aufweist.

3. Verfahren gemäß Anspruch 1 oder 2, **dadurch gekennzeichnet, dass** die wasserabsorbierenden Polymerpartikel im Produktmassenstrom einen Feuchtegehalt von 1 bis 20 Gew.-% aufweisen.

4. Verfahren gemäß einem der Ansprüche 1 bis 3, **dadurch gekennzeichnet, dass** der Feuchtegehalt der wasserabsorbierenden Polymerpartikel vor dem Magnetabscheider erhöht wird.

5. Verfahren gemäß einem der Ansprüche 1 bis 4, **dadurch gekennzeichnet, dass** die Flächenbelastung des Magnetabscheiders von 2 bis 15 g/cm$^2$s beträgt, wobei die Flächenbelastung die Produktmasse in g ist, die die Querschnittsfläche von 1 cm$^2$ senkrecht zur Produktstromrichtung passiert.

6. Verfahren gemäß einem der Ansprüche 1 bis 5, **dadurch gekennzeichnet, dass** die Stabmagnete einen Durchmesser von 5 bis 30 mm aufweisen.

7. Verfahren gemäß einem der Ansprüche 1 bis 6, **dadurch gekennzeichnet, dass** der Abstand der Stabmagnete von 5 bis 30 mm beträgt.

8. Verfahren gemäß einem der Ansprüche 1 bis 7, **dadurch gekennzeichnet, dass** mindestens 95 Gew.-% der wasserabsorbierenden Polymerpartikel eine Partikelgröße von mindestens 150 μm aufweisen.

**9.** Verfahren gemäß einem der Ansprüche 1 bis 8, **dadurch gekennzeichnet, dass** mindestens 95 Gew.-% der wasserabsorbierenden Polymerpartikel eine Partikelgröße von höchstens 600 $\mu$m aufweisen.

**10.** Verfahren gemäß einem der Ansprüche 1 bis 9, **dadurch gekennzeichnet, dass** die wasserabsorbierenden Polymerpartikel eine Zentrifugenretentionskapazität gemessen gemäß der von der EDANA empfohlenen Testmethode Nr. WSP-241.2-.5, von mindestens 15 g/g aufweisen.

**11.** Verfahren zur Abtrennung metallischer Verunreinigungen aus einem wasserabsorbierende Polymerpartikel enthaltenden Produktmassenstrom mittels eines Magnetabscheiders, wobei der Magnetabscheider aus ein Stabmagneten aufgebaut ist, die Stabmagnete aus einer Hülse und einem in der Hülse befindlichen magnetischem Material bestehen und die Hülse unlösbar mit dem magnetischen Material verbunden ist, **dadurch gekennzeichnet, dass** die Hülsen unmittelbaren Kontakt zu den wasserabsorbierenden Polymerpartikeln haben können und die wasserabsorbierenden Polymerpartikel mindestens ein Tensid enthalten.

**12.** Verfahren gemäß Anspruch 11, **dadurch gekennzeichnet, dass** die wasserabsorbierende Polymerpartikel eine Zentrifugenretentionskapazität von mindestens 15 g/g aufweisen.

**Claims**

**1.** A process for producing water-absorbing polymer particles by polymerizing a monomer solution or suspension comprising

>a) at least one ethylenically unsaturated monomer which bears acid groups and may be at least partly neutralized,
>b) at least one crosslinker,
>c) at least one initiator,
>d) optionally one or more ethylenically unsaturated monomers copolymerizable with the monomers specified under a) and
>e) optionally one or more water-soluble polymers,

metallic impurities being removed from a product mass flow comprising water-absorbing polymer particles by means of a magnetic separator, the magnetic separator being formed from bar magnets, the bar magnets consisting of a sleeve and a magnetic material present within the sleeve, and the sleeve being bonded to the magnetic material in an undetachable manner, wherein the sleeves may have direct contact to the water-absorbing polymer particles and said water-absorbing polymer particles comprise at least one surfactant.

**2.** The process according to claim 1, wherein the product mass flow has a temperature of 30 to 90°C.

**3.** The process according to claim 1 or 2, wherein the water-absorbing polymer particles in the product mass flow have a moisture content of 1 to 20% by weight.

**4.** The process according to any one of claims 1 to 3, wherein the moisture content of the water-absorbing polymer particles is increased upstream of the magnetic separator.

**5.** The process according to any one of claims 1 to 4, wherein the areal loading of the magnetic separator is 2 to 15 g/cm$^2$s, the areal loading being the product mass in g which passes the cross-sectional area of 1 cm$^2$ at right angles to the product flow direction.

**6.** The process according to any one of claims 1 to 5, wherein the bar magnets have a diameter of 5 to 30 mm.

**7.** The process according to any one of claims 1 to 6, wherein the distance between the bar magnets is from 5 to 30 mm.

**8.** The process according to any one of claims 1 to 7, wherein at least 95% by weight of the water-absorbing polymer particles have a particle size of at least 150 $\mu$m.

**9.** The process according to any one of claims 1 to 8, wherein at least 95% by weight of the water-absorbing polymer particles have a particle size of at most 600 $\mu$m.

10. The process according to any one of claims 1 to 9, wherein the water-absorbing polymer particles have a centrifuge retention capacity, measured by EDANA recommended test method No. WSP-241.2-05, of at least 15 g/g.

11. A process for removing metallic impurities from a product mass flow comprising water-absorbing polymer particles by means of a magnetic separator, the magnetic separator being formed from a bar magnet, the bar magnets consisting of a sleeve and a magnetic material present within the sleeve, and the sleeve being bonded to the magnetic material in an undetachable manner, wherein the sleeves may have direct contact to the water-absorbing polymer particles and said water-absorbing polymer particles comprise at least one surfactant.

12. The process according to claim 11, wherein the water-absorbing polymer particles have a centrifuge retention capacity of at least 15 g/g.


**Revendications**

1. Procédé de fabrication de particules polymères absorbant l'eau par polymérisation d'une solution ou suspension de monomères contenant

   a) au moins un monomère éthyléniquement insaturé, portant des groupes acides, qui peut être au moins partiellement neutralisé,
   b) au moins un agent de réticulation,
   c) au moins un initiateur,
   d) éventuellement un ou plusieurs monomères éthyléniquement insaturés copolymérisables avec les monomères cités en a), et
   e) éventuellement un ou plusieurs polymères solubles dans l'eau,

   des impuretés métalliques étant séparées d'un courant massique de produit contenant des particules polymères absorbant l'eau au moyen d'un séparateur magnétique, le séparateur magnétique étant à base d'aimants droits, les aimants droits étant constitués d'une enveloppe et d'un matériau magnétique se trouvant dans l'enveloppe, et l'enveloppe étant reliée de manière inséparable avec le matériau magnétique, **caractérisé en ce que** les enveloppes peuvent être en contact direct avec les particules polymères absorbant l'eau et les particules polymères absorbant l'eau contiennent au moins un tensioactif.

2. Procédé selon la revendication 1, **caractérisé en ce que** le courant massique de produit présente une température de 30 à 90 °C.

3. Procédé selon la revendication 1 ou 2, **caractérisé en ce que** les particules polymères absorbant l'eau dans le courant massique de produit présentent une teneur en humidité de 1 à 20 % en poids.

4. Procédé selon l'une quelconque des revendications 1 à 3, **caractérisé en ce que** la teneur en humidité des particules polymères absorbant l'eau est augmentée avant le séparateur magnétique.

5. Procédé selon l'une quelconque des revendications 1 à 4, **caractérisé en ce que** la charge de surface du séparateur magnétique est de 2 à 15 g/cm$^2$s, la charge de surface étant la masse de produit en g qui traverse la section de 1 cm$^2$ perpendiculairement à la direction du courant de produit.

6. Procédé selon l'une quelconque des revendications 1 à 5, **caractérisé en ce que** les aimants droits présentent un diamètre de 5 à 30 mm.

7. Procédé selon l'une quelconque des revendications 1 à 6, **caractérisé en ce que** la distance entre les aimants droits est de 5 à 30 mm.

8. Procédé selon l'une quelconque des revendications 1 à 7, **caractérisé en ce qu'**au moins 95 % en poids des particules polymères absorbant l'eau présentent une taille de particule d'au moins 150 $\mu$m.

9. Procédé selon l'une quelconque des revendications 1 à 8, **caractérisé en ce qu'**au moins 95 % en poids des particules polymères absorbant l'eau présentent une taille de particule d'au plus 600 $\mu$m.

**10.** Procédé selon l'une quelconque des revendications 1 à 9, **caractérisé en ce que** les particules polymères absorbant l'eau présentent une capacité de rétention centrifuge, mesurée selon le procédé de test n° WSP-241.2-05 recommandé par l'EDANA, d'au moins 15 g/g.

**11.** Procédé de séparation d'impuretés métalliques d'un courant massique de produit contenant des particules polymères absorbant l'eau au moyen d'un séparateur magnétique, le séparateur magnétique étant à base d'aimants droits, les aimants droits étant constitués d'une enveloppe et d'un matériau magnétique se trouvant dans l'enveloppe, et l'enveloppe étant reliée de manière inséparable avec le matériau magnétique, **caractérisé en ce que** les enveloppes peuvent être en contact direct avec les particules polymères absorbant l'eau et les particules polymères absorbant l'eau contiennent au moins un tensioactif.

**12.** Procédé selon la revendication 11, **caractérisé en ce que** les particules polymères absorbant l'eau présentent une capacité de rétention centrifuge d'au moins 15 g/g.

**EP 2 424 900 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1422257 A1
- WO 2006042704 A2
- WO 2002055469 A1
- WO 2003078378 A1
- WO 2004035514 A1
- EP 0530438 A1
- EP 0547847 A1
- EP 0559476 A1
- EP 0632068 A1
- WO 9321237 A1
- WO 2003104299 A1
- WO 2003104300 A1
- WO 2003104301 A1
- DE 10331450 A1
- DE 10331456 A1
- DE 10355401 A1
- DE 19543368 A1
- DE 19646484 A1
- WO 9015830 A1
- WO 2002032962 A2
- WO 2001038402 A1
- DE 3825366 A1

- US 6241928 B
- WO 2008040715 A2
- WO 2008052971 A1
- EP 0083022 A2
- EP 0543303 A1
- EP 0937736 A2
- DE 3314019 A1
- DE 3523617 A1
- EP 0450922 A2
- DE 10204938 A1
- US 6239230 B
- DE 4020780 C1
- DE 19807502 A1
- DE 19807992 C
- DE 19854573 A1
- DE 19854574 A1
- DE 10204937 A1
- DE 10334584 A1
- EP 1199327 A2
- WO 2003031482 A1
- DE 3713601 A1
- EP 0640330 A1

**In der Beschreibung aufgeführte Nicht-Patentliteratur**

- **F.L. BUCHHOLZ ; A.T. GRAHAM.** Modern Superabsorbent Polymer Technology. Wiley-VCH, 1998, 71-103

- *Römpp Chemie Lexikon,* ISBN 3-13-102759-2, 4497